Europäisches Patentamt

European Patent Office

Office européen des brevets

(19)

(11) Veröffentlichungsnummer: **0 047 866**
**B1**

(12) **EUROPÄISCHE PATENTSCHRIFT**

(45) Veröffentlichungstag der Patentschrift:
18.05.83

(21) Anmeldenummer: 81106360.1

(22) Anmeldetag: 17.08.81

(51) Int. Cl.³: **C 07 C 69/767**, C 07 C 67/11,
C 08 K 5/12

(54) Tetrabromphthalsäureester, Herstellung und Verwendung als Brandschutzmittel in Kunststoffen.

(30) Priorität: 13.09.80 DE 3034634

(43) Veröffentlichungstag der Anmeldung:
24.03.82 Patentblatt 82/12

(45) Bekanntmachung des Hinweises auf die Patenterteilung:
18.05.83 Patentblatt 83/20

(84) Benannte Vertragsstaaten:
**BE FR GB IT NL**

(56) Entgegenhaltungen:
**US-A-3 585 185**

(73) Patentinhaber: **Chemische Fabrik Kalk GmbH, Kalker Hauptstrasse 22 Postfach 91 01 57, D-5000 Köln 91 (DE)**

(72) Erfinder: **Jenkner, Herbert, Dr. Dipl.-Chem., Am Quechenhauf 8, D-5024 Pulheim 2 (DE)**
Erfinder: **Strang, Robert, Mattlener Weg 9, D-5000 Köln 71 (DE)**

Tetrabromphthalsäureester, Herstellung und Verwendung als Brandschutzmittel in Kunststoffen.

Von Brandschutzmitteln, die in thermoplastische Kunststoffe eingearbeitet werden sollen, werden besondere Eigenschaften gefordert. Sie dürfen sich bei den hohen Verarbeitungstemperaturen der thermoplastischen Kunststoffe thermisch nicht zersetzen und sollen aus den thermoplastischen Kunststoffen, in die sie eingearbeitet sind, nicht ausschwitzen. Verschiedene Brandschutzmittel, wie beispielsweise hochbromierte Diphenyle oder hochbromierte Diphenyläther neigen zum Ausschwitzen, wenn sie extremen Witterungsverhältnissen ausgesetzt werden. Diese Brandschutzmittel tendieren dazu, wenn sie beispielsweise in einem Kunststoff eingearbeitet, dem sogen. Tropentest, d.h. 14-tägiger Lagerung bei 50°C und einer relativen Luftfeuchtigkeit von 100% ausgesetzt werden, an die Oberfläche zu migrieren. Sie erzeugen dabei nicht nur einen unerwünschten Oberflächenbelag, sondern es vermindert sich in gleichem Mass auch die beabsichtigte Brandschutzwirkung.

Somit ergab sich die Aufgabe, geeignete Brandschutzmittel für thermoplastische Kunststoffe zu finden, bei denen die erwähnten unerwünschten Eigenschaften nicht auftreten.

Gegenstand der vorliegenden Erfindung sind Tetrabromphthalsäureester des Pentabrombenzylalkohols mit einer Erweichungstemperatur von 270 bis 280°C und einem Bromgehalt von 75 Gew.% sowie des Tetrakis-(brommethyl)-o-xylylenglykols mit einer Erweichungstemperatur von 220 bis 230°C und einem Bromgehalt von 67 Gew.%. Es sind feinteilige, schwach gefärbte Produkte, die sich erst bei Temperaturen zersetzen, die merklich über der oberen Grenze des jeweiligen Erweichungstemperatur-Bereichs liegen.

Hergestellt werden diese Produkte, indem Tetrabromphthalsäure oder -anhydrid in einem polaren Lösungsmittel, vorzugsweise Glykolmonomethyläther, in Gegenwart von Alkalihydroxid mit Pentabrombenzylhalogenid, vorzugsweise Pentabrombenzylbromid, bzw. Hexakis-(brommethy)-benzol bei einer Temperatur von 60 bis 100°C umgesetzt wird.

Die erfindungsgemässen Produkte zeichnen sich durch gute Thermostabilität aus, haben einen Zersetzungspunkt von oberhalb 260°C und eignen sich als Brandschutzmittel für thermoplastische Kunststoffe, insbesondere für Polyolefine und Polystyrol, auch in Form von ABS-Polymerisation. Ebenso eignen sie sich für gesättigte Polyester in kompakter Form oder als Fasern oder Folien.

Zur Herstellung der erfindungsgemässen Produkte wird in einem Reaktionsgefäss eine wässrige Alkalihydroxidlösung mit einem Gehalt an Alkalihydroxid, der etwa 3 bis 4 Gew.% höher liegt als die in stöchiometrischer Menge beteiligten Reaktionspartner, in einem polaren Lösungsmittel, wie beispielsweise Glykolmonomethyläther, gelöst. Portionsweise wird Tetrabromphthalsäure oder -anhydrid dieser Lösung zugefügt und das Gemisch auf etwa 60–100°C erwärmt. Danach wird das Pentabrombenzylhalogenid bzw. Hexakis-(brommethyl)-benzol unter Rühren zudosiert und die Umsetzung der Reationskomponenten im Verlaufe mehrerer Stunden bei dieser Temperatur durchgeführt. Zur Aufarbeitung werden aus den jeweils abgekühlten Reaktionsgemischen die Feststoffe abgesaugt, mit frischem Lösungsmittel und anschliessend mit Wasser neutral bzw. bromidfrei gewaschen und getrocknet.

Die so hergestellten erfindungsgemässen Produkte werden in an sich bekannter Weise in den jeweiligen thermoplastischen Kunststoff eingearbeitet. Die eingearbeitete Menge dieser Brandschutzkomponente beträgt je nach der zu erzielenden Brandwidrigkeit und je nach der Art des Kunststoffs, vorzugsweise 5 bis 20 Gew.%, bezogen auf die gebrauchsfertige Kunststoffmischung.

Mit den nachfolgenden Beispielen soll die Herstellung der erfindungsgemässen Produkte beschrieben werden.

Beispiel 1

In einem Reaktionsgefäss werden zu einer Lösung von 12 500 Gew.-Teilen Glykolmonomethyläther und 1547 Gew.-Teilen einer 15 Gew.%-igen Natriumhydroxidlösung unter Rühren 1300 Gew.-Teile Tetrabromphthalsäureanhydrid im Laufe von 1 Stunde portionsweise zugegeben und das Gemisch dabei auf 80°C erwärmt. Danach werden zu diesem Gemisch 3172 Gew.-Teile Pentabrombenzylbromid zugefügt, die Reaktionstemperatur am Rückflusskühler auf 105°C erhöht und im Laufe von 12 Stunden wird die Umsetzung zu Ende geführt, wobei das Reaktionsprodukt beginnt, sich als feinteiliger Feststoff in dem Reaktionsgemisch abzuscheiden. Das Reaktionsprodukt wird nach dem Abkühlen des Reaktionsgemisches auf Raumtemperatur abgesaugt und mit 2000 Gew.-Teilen Glykolmonomethyläther gewaschen. Zur restlosen Entfernung von anhaftendem Natriumhydroxid bzw. Natriumbromid wird der Filterkuchen in 15 000 Gew.-Teilen Wasser aufgeschlämmt und abgesaugt. Nach dem Trocknen bei 70–100°C werden 3663 Gew.-Teile feinteiliger, beige gefärbter Tetrabromphthalsäure-bis-(pentabrombenzyl)-ester erhalten. Die Ausbeute entspricht 90,1% der Theorie. Das Produkt hat einen Br-Gehalt von 75,3% und schmilzt bei 270–280°C.

Beispiel 2

In einem Reaktionsgefäss werden zu einer Lösung von 2900 Gew.-Teilen Glykolmonomethyläther und 335 Gew.-Teilen einer 15%-igen Natriumhydroxidlösung unter Rühren 279 Gew.-Teile Tetrabromphthalsäureanhydrid zugegeben und dabei auf 60°C erwärmt. Nach 1 Stunde werden 383 Gew.-Teile Hexakis-(brommethyl)-benzol zugefügt und unter Rühren das Gemisch 3 Stunden auf dieser Temperatur gehalten. Anschliessend wird die Reaktionstemperatur auf 80°C erhöht und im Laufe von 16 Stunden die Umsetzung bei dieser Temperatur zu Ende geführt. Die Aufarbeitung verläuft in gleicher Weise wie in Beispiel 1 beschrieben. Die Ausbeute beträgt 385 Gew.-Teile feinteiligen beige gefärbten Tetrabromphthalsäureester des Tetrakis-(brommethyl)-o-xylylenglykols und entspricht 66,9% der Theorie. Das Produkt hat einen Br-Gehalt von 67,0% und einen Erweichungspunkt von etwa 230°C.

Die erfindungsgemässen Produkte, der Tetrabromphthalsäureester des Pentabrombenzylalkohols (I) bzw. der Tetrabromphthalsäureester des Tetrakis-(brommethyl)-o-xylylenglykols (II) werden zusammen mit Antimontrioxid in an sich bekannter Weise in folgende Kunststoffe eingearbeitet:

A in Acrylnitril-Butadien-Styrol-Polymerisat (ABS)
B in schlagzähes Polystyrol (HIPS)
C in Polytetramethylenterephthalat (PTMT)
D in Niederdruck-Polyäthylen (HDPE)

Aus diesen Mischungen werden für den Brandtest nach UL 94 Stäbe von 1,6 mm und 3,2 mm Stärke, für die Brandtests nach ASTM D 635-74 und nach ASTM D 2863-74 (Sauerstoffindex) Stäbe von 4 mm Stärke und für die Ausschwitztests Platten von 1,5 mm Stärke hergestellt.

Zum Brandtest UL 94 der Underwriter's Laboratories, USA, folgende Angaben:

Eine Probe von 127 mm Länge und 12,7 mm Breite wird so in eine Haltevorrichtung eingespannt, dass die Längsachse der Probe senkrecht verläuft und ihre Vorderkante sich 9,5 mm über dem Brennerrohr eines Bunsenbrenners befindet. Der Brenner wird abseits der Probe entzündet, die nichtleuchtende Flamme auf eine Höhe von 19 mm eingestellt und dann der Brenner unter die Mitte der Probenunterkante gestellt. Nach 10 Sekunden wird der Brenner entfernt und Nachbrenndauer und Nachglimmdauer der Probe gemessen. Nach vollständigem Erlöschen wird die Probe ein zweites Mal 10 Sekunden beflammt und die zweite Nachbrenn- und Nachglimmdauer bestimmt.

Danach wird die Probe in folgende Klassen eingestuft:

HB = die Probe brennt nach Entfernen der Flamme weiter
V-0 = keine Nachbrenndauer von zusammen mehr als 10 sek.
keine Nachglimmdauer über 30 sek. nach der 2. Beflammung; kein Abtropfen, das untergelegte Watte entzündet
V-1 = keine Nachbrenndauer von zusammen mehr als 50 sek.
keine Nachglimmdauer über 60 sek. nach der 2. Beflammung; kein Abtropfen, das untergelegte Watte entzündet
V-2 = keine Nachbrenndauer von zusammen mehr als 50 sek.
keine Nachglimmdauer über 60 sek. nach der 2. Beflammung; Probe darf brennend abtropfen und untergelegte Watte entzünden.

Die Untersuchungsergebnisse zeigt die nachfolgende Tabelle:

Tabelle

| | ABS (A) | | | HIPS (B) | | | PTMT (C) | | HDPE (D) | | |
|---|---|---|---|---|---|---|---|---|---|---|---|
| **Zusammensetzung in %** | | | | | | | | | | | |
| Kunststoff | 100 | 78,5 | 76,5 | 100 | 80,5 | 78,5 | 100 | 86 | 100 | 92 | 90 |
| Produkt I | – | 16,5 | – | – | 15,5 | – | – | 10 | – | – | – |
| Produkt II | – | – | 18,5 | – | – | 17,5 | – | – | – | – | 6,5 |
| Antimontrioxid | – | 5,0 | 5,0 | – | 4,0 | 4,0 | – | – | – | – | 3,5 |
| **Brandtests** | | | | | | | | | | | |
| ASTM-D 635-74 | | | | | | | | | | | |
| Nachbrenndauer sek. | 178 | 5 | 5 | 165 | 5 | 5 | – | – | 160 | 5 | 5 |
| ASTM-D 635-74 | | | | | | | | | | | |
| max. Brennlänge mm | 100 | 14 | 13 | 100 | 12 | 12 | – | – | 100 | 16 | 19 |
| ASTM-D 2863-74 | | | | | | | | | | | |
| Sauerstoff % | 18,5 | – | – | 17,5 | – | – | – | – | 16,5 | – | – |
| UL 94-Klasse | | | | | | | | | | | |
| Plattenst. 1,6 mm | HB | V-0 | V-0 | HB | V-0 | V-0 | HB | V-0 | – | – | – |
| Plattenst. 3,2 mm | HB | V-0 | V-0 | HB | V-0 | V-0 | HB | V-0 | – | – | – |
| **Ausschwitztests** | | | | | | | | | | | |
| 14 Tage 80°C | | | | | | | | | | | |
| Gewichtsverlust % | – | 3,0 | 1,5 | – | 0 | 0 | – | 2,1 | – | 20,1 | 3,5 |
| 14 Tage 50°C | | | | | | | | | | | |
| 100% rel. Feuchte | | | | | | | | | | | |
| Gewichtsverlust % | – | 1,0 | 0,5 | – | 0 | 0 | – | 0 | – | 5,6 | 1,9 |
| Belag | | kein Belag | ger. Belag | | kein Belag | kein Belag | | kein Belag | | stark. Belag | kein Belag |

Der Gewichtsverlust ist auf die Menge des eingesetzten Brandschutzmittels bezogen.

**Patentansprüche**

1. Tetrabromphthalsäureester des Pentabrombenzylalkohols mit einer Erweichungstemperatur von 270 bis 280°C und einem Bromgehalt von 75 Gew.% sowie des Tetrakis-(brommethyl)-o-xylylenglykols mit einer Erweichungstemperatur von 220 bis 230°C und einem Bromgehalt von 67 Gew.%.

2. Verfahren zur Herstellung der Produkte nach Anspruch 1, dadurch gekennzeichnet, dass Tetrabromphthalsäure oder -anhydrid in einem polaren Lösungsmittel, vorzugsweise Glykolmonomethyläther, in Gegenwart von Alkalihydroxid mit Pentabrombenzylhalogenid bzw. Hexakis-(brommethyl)-benzol bei einer Temperatur von 60 bis 100°C umgesetzt wird.

3. Verwendung der Produkte nach Ansprüchen 1 und 2 als Brandschutzmittel für thermoplastische Kunststoffe.

**Claims**

1. Tetrabromophthalic acid esters of pentabromobenzyl alcohol with a softening temperature of 270 to 280°C and a bromine content of 75% by weight and of Tetrakis-(bromomethyl)-o-xylylene glycol with a softening temperature of 220 to 230°C and a bromine content of 67% by weight.

2. Process for producing the products in claim 1, characterized by the reaction of tetrabromophthalic acid or anhydride in a polar solvent, preferably glycolmonomethylether, in the presence of an alkali hydroxide with pentabromobenzyl halide or Hexakis-(bromomethyl)-benzene at a temperature of 60 to 100°C.

3. Use of the products in claims 1 and 2 as a fire protection finish for thermoplastics.

**Revendications**

1. Esters de l'acide tétrabromophtalique et de l'alcool pentabromobenzylique, à température de ramollissement de 270 à 280°C et à teneur en brome de 75% en poids, ainsi que du tétrakis-(bromométhyl)-o-xylylèneglycol, à température de ramollissement de 220 à 230°C et à teneur en brome de 67% en poids.

2. Procédé de préparation des produits suivant la revendication 1, caractérisé en ce que de l'acide ou de l'anhydride tétrabromophtalique est mis à réagir à une température de 60 à 100°C dans un solvant polaire, de préférence de l'éther monométhylique du glycol, en présence d'hydroxyde alcalin, avec de l'halogénure de pentabromobenzyle ou de l'hexykis-(bromométhyl)-benzène.

3. Utilisation des produits suivant les revendications 1 et 2 comme ignifuges pour matières thermoplastiques.